# EUROPÄISCHE PATENTSCHRIFT

(11) **EP 1 248 967 B1**
(45) Veröffentlichungstag und Bekanntmachung des Hinweises auf die Patenterteilung: **24.03.2004**
(21) Anmeldenummer: 00902549.5
(22) Anmeldetag: 10.01.2000
(51) Int. Cl.: G05B 19/414

(54) **UNIVERSELLE BEWEGUNGSSTEUERUNG**
UNIVERSAL MOTION CONTROL
COMMANDE CINEMATIQUE UNIVERSELLE

(43) Veröffentlichungstag der Anmeldung: 16.10.2002
(73) Patentinhaber: SIEMENS AKTIENGESELLSCHAFT, 80333 München (DE)
(72) Erfinder: WUCHERER, Klaus, D-90610 Winkelhaid (DE); AMRHEIN, Armin, D-92245 Kümmersbruck (DE); HESS, Karl, D-09244 Lichtenau (DE); HEBER, Tino, D-09599 Freiberg (DE); KIRSTE, Steffen, D-09439 Amtsberg-Dittersdorf (DE)
(86) Internationale Anmeldenummer: PCT/DE2000/000059
(87) Internationale Veröffentlichungsnummer: WO 2001/052006

(56) Entgegenhaltungen:
- US-A- 5 877 959
- "CNC-STEUERUNG MIT INTEGRIERTER SPS" WERKSTATT UND BETRIEB,DE,CARL HANSER VERLAG. MUNCHEN, Bd. 128, Nr. 1/02, 1. Februar 1995 (1995-02-01), Seite 80 XP000482644 ISSN: 0043-2792
- "CNC-BEDIENOBERFLACHEN INDIVIDUELL GESTALTEN" ZWF ZEITSCHRIFT FUR WIRTSCHAFTLICHE FERTIGUNG UND AUTOMATISIERUNG,DE,CARL HANSER VERLAG. MUNCHEN, Bd. 88, Nr. 9, 1. September 1993 (1993-09-01), Seite 380 XP000396521 ISSN: 0947-0085

## Beschreibung

Die Erfindung bezieht sich auf eine universelle Bewegungssteuerung, welche funktionell die klassischen Aufgaben einer speicherprogrammierbaren Steuerung und einer numerischen Steuerung in sich vereinigt.

Es ist heutzutage üblich, sowohl für die speicherprogrammierbare Steuerung als auch für die Bewegungssteuerung jeweils unterschiedliche hierarchische Ablaufebenen zu modellieren, denen Software-Tasks zur Steuerung des jeweiligen technischen Prozesses zugeordnet werden. Diese Tasks können Systemaufgaben erfüllen, sie können aber auch anwenderprogrammiert sein.

Aus DE 197 40 550 A1 ist es bekannt, daß Prozeßsteuerungsfunktionalitäten der speicherprogrammierbaren Steuerungen "SPS" und Bewegungsfunktionalitäten von NC-Steuerung in einem einheitlichen konfigurierbaren Steuerungssystem integriert werden können.

Diese SPS/NC-Integration geschieht in Form des Zusammenschaltens von SPS- und NC-Steuerungsbaugruppen. Bei einer solchen Ausführung der Integration wird aber keine optimale und effiziente Taskstruktur für die Gesamtheit der Steuerungsaufgaben erreicht.

Der Erfindung liegt daher die Aufgabe zugrunde, für jeweils unterschiedliche Steuerungsaufgaben und unterschiedliche Randbedingungen bzw. Anforderungen des zugrundeliegenden technischen Prozesses in einfacher Weise optimale Ausprägungen der kombinierten SPS/NC-Steuerung zu erstellen.

Diese optimalen Ausprägungen werden prinzipiell durch ein einheitliches konfigurierbares Ablaufebenenmodell für die Steuerungstasks der kombinierten SPS/NC-Steuerung erreicht.

Von diesem Ansatz ausgehend wird die obengenannte Aufgabe dadurch gelöst, daß ein einheitliches Ablaufebenenmodell gebildet ist, das mehrere Ablaufebenen unterschiedlichen Typs mit unterschiedlicher Priorität aufweist, wobei von höchster bis niedrigster Priorität folgende Ablaufebenen vorgesehen sind:
a) eine Lagereglerebene, bestehend aus zugehöriger getakteter Systemebene und Anwenderebene,
b) eine Interpolatorebene, bestehend aus zugehöriger getakteter Systemebene und Anwenderebene,
c) eine Event-Systemebene für reaktionspflichtige Ereignisse,
d) eine Anwenderebene für asynchrone Fehler
e) eine weitere, vom Anwender anforderungsspezifisch frei projektierbare Anwenderebene für Alarm- und/oder Event- und/oder Regelungs- und/oder sonstige zyklische Tasks,
f) eine aus der Abfolge von Bewegungssequenzen, freien Zyklen und niederprioren sonstigen Systemtasks, gebildete Ebenengruppe für Hintergrund-Bearbeitung,
wobei die Ablaufebenen a bis e eine Ebenengruppe für Echtzeit-Bearbeitung bilden.

Ein wesentlicher Vorteil dieser Schichtung liegt darin, daß die Kommunikation zwischen den Tasks der Prozeßsteuerung und denen der Bewegungssteuerung minimiert wird. Ein weiterer Vorteil liegt darin, daß die Programmierung der Steuerungsaufgaben für die Prozeßsteuerung und für die Bewegungssteuerung in einer einheitlichen Programmiersprache mit einer einheitlichen Erstelloberfläche erfolgen kann.

Eine erste Ausgestaltung der vorliegenden Erfindung liegt darin, daß die frei programmierbaren Tasks jeweils durch Signale aus den getakteten Systemebenen und/oder durch Signale aus der Event-Systemebene auslösbar sind.
Dadurch wird sichergestellt, daß z.B. auf externe Ereignisse von der Steuerung sofort reagiert werden kann.

Eine weitere vorteilhafte Ausgestaltung der Erfindung liegt darin, daß weitere priorisierende Schichtungen innerhalb der Ablaufebenen vorgesehen sind. Die Softwarestruktur der kombinierten SPS/NC-Bewegungssteuerung läßt sich dadurch optimal an die unterschiedlichen Steuerungsaufgaben bzw. an die Anforderungen des zugrundeliegenden technischen Prozesses anpassen. So lassen sich innerhalb der Anwenderebene für asynchrone Fehler somit unterschiedliche Fehlerursachen unterschiedlichen Ebenen mit aufsteigender Priorität zuordnen.

Hierbei ist es möglich, daß in der Anwenderebene für asynchrone Fehler die Prioritätsschichtungen anwenderprogrammierbar sind. Damit läßt sich sehr flexibel vom Anwender die Steuerung an das der Anwendung zugrundeliegende Ereignisspektrum anpassen.

Eine weitere vorteilhafte Ausgestaltung der Erfindung liegt darin, daß in der "Ebenengruppe für Echtzeit-Bearbeitung" auch von außen zuladbare Programme integrierbar sind. Durch dieses Nachladen kann die Ausgangssteuerung um weitere technologische Funktionalität dynamisch erweitert werden.

Eine weitere vorteilhafte Ausgestaltung der Erfindung liegt darin, daß in der Ebenengruppe für Hintergrund-Bearbeitung die Bewegungssequenzen, freien Zyklen und niederprioren sonstigen Systemtasks nach einem Round-Robin-Verfahren abwickelbar sind.

Dadurch wird sichergestellt, daß alle Tasks auf dieser Ebene innerhalb einer vom Anwender festlegbaren Zeitspanne bedient werden, und keine Task auf dieser Ebene vergeblich auf ihre Bearbeitung warten muß.

Die wesentlichen mit der Erfindung erzielten Vorteile bestehen also insbesondere darin, daß durch die Möglichkeit der Parametrierung der Ablaufebenen durch den Anwender jeweils eine optimale Gestaltung der Steuerung für die entsprechenden Situationen erreicht werden kann. Denn jede Steuerungsaufgabe und jeder technische Prozeß stellen unterschiedliche Anforderungen an die softwaretechnische Umsetzung bzw. Lösung innerhalb der Steuerung (z.B. Anzahl der benötigten Programme, Module, Tasks, Anzahl möglicher Fehlersituationen, Anzahl externer Ereignisse, auf die entsprechend reagiert werden muß, Komplexität der Synchronisation). Weiterhin wird durch die Integration der Prozeßsteuerung und der Bewegungssteuerung der Kommunikationsaufwand innerhalb der Steuerung drastisch reduziert.

Ein Ausführungsbeispiel der Erfindung ist in der Zeichnung dargestellt und wird im folgenden erläutert.

Dabei zeigen:
- FIG 1: eine bekannte Steuerung eines technischen Prozesses mit getrennter speicherprogrammierbarer Steuerung und Bewegungssteuerung. Die Programmierung erfolgt über jeweils separate Programmiersysteme,
- FIG 2: die wesentlichen Ablaufebenen einer klassischen speicherprogrammierbaren Steuerung,
- FIG 3: die wesentlichen Ablaufebenen einer Bewegungssteuerung,
- FIG 4: die erfindungsgemäße universelle Steuerung,
- FIG 5: das Ablaufebenenmodell dieser universellen Steuerung,
- FIG 6: das Aufrufen von Tasks aus den beiden getakteten Systemebenen und aus der "Event-Systemebene" des Ablaufebenenmodells der universellen Steuerung,
- FIG 7: ein Ausführungsbeispiel für die vom Anwender anforderungsspezifisch frei projektierbare Anwenderebene für Alarm- und/oder Event- und/oder Regelungs- und/oder sonstige zyklische Tasks und
- FIG 8: ein Ausführungsbeispiel, wie in der Ebenengruppe für Hintergrund-Bearbeitung eine Abfolge von Bewegungssequenzen, freien Zyklen und niederprioren sonstigen Systemtasks nach dem Verfahren Round-Robin abgearbeitet werden.

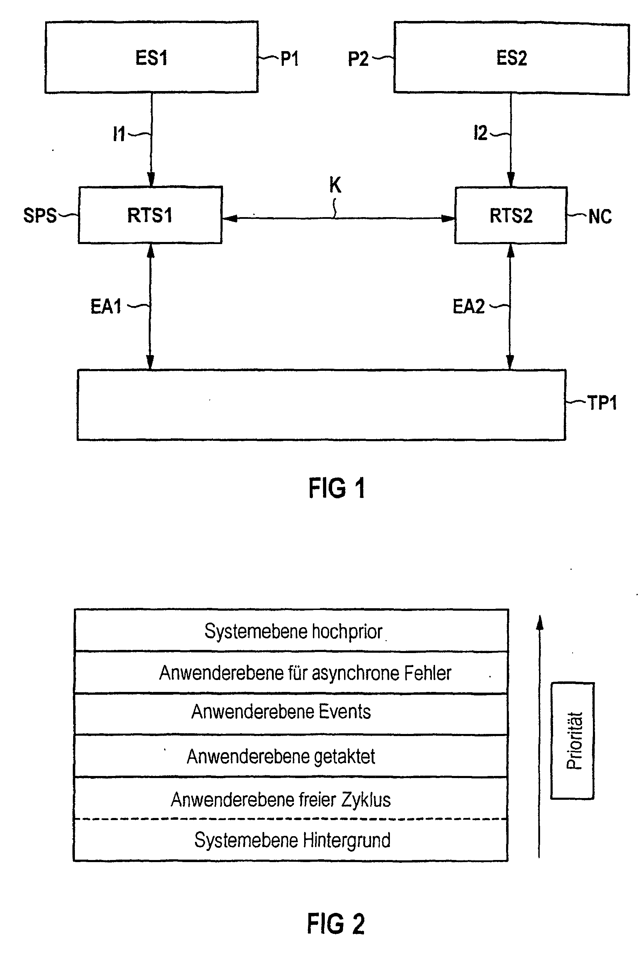

In Darstellung gemäß FIG 1 wird, in Form eines Strukturbildes gezeigt, daß zur Steuerung eines technischen Prozesses TP1 ein paralleler Betrieb einer speicherprogrammierbaren Steuerung SPS und einer Bewegungssteuerung NC stattfindet. Speicherprogrammierbare Steuerung SPS und Bewegungssteuerung NC enthalten jeweils ein Run-Time-System RTS1 bzw. RTS2. Die Kommunikation zwischen den beiden Steuerungen erfolgt über spezielle Hilfsmittel, exemplarisch dargestellt ist ein bidirektionaler Kommunikationskanal K. Die Programmierung der Steuerungen durch den Anwender erfolgt in der Regel in unterschiedlichen Programmiersprachen mit unterschiedlichen Erstelloberflächen. Das heißt, durch jeweils separate Programmier- oder Engineering-Systeme P1, ES1 und P2, ES2. Der wesentliche Nachteil dieser konventionellen Ausführung liegt zum einen in der aufwendigen Kommunikation zwischen den beiden Steuerungen, zum anderen in den separaten und unterschiedlichen Programmier- bzw. Engineering-Systemen P1, ES1 und P2, ES2. Über Ein- und Ausgänge EA1, EA2 der Steuerungen wird der eigentliche technische Prozeß TP1 gesteuert. Zwischen dem Programmiersystem P1 und der speicherprogrammierbaren Steuerung SPS bzw. zwischen dem Programmiersystem P2 und der numerischen Steuerung NC befinden sich Informationspfade I1 bzw. I2, auf denen die Programme in die jeweilige Steuerung geladen werden.

In der Darstellung gemäß FIG 2 sind die wesentlichen Ablaufebenen einer klassischen speicherprogrammierbaren Steuerung (SPS; FIG 1), angeordnet nach ihrer Priorität, gezeigt. Der Prioritätsanstieg ist dabei durch einen Pfeil symbolisiert. In der niederpriorsten Ebene werden, wie durch eine gestrichelte Linie angedeutet, zwei unterschiedliche Aufgaben, nämlich ein freier Zyklus, d.h. "Anwenderebene freier Zyklus" und eine Hintergrund-Systemebene, d.h. "Systemebene Hintergrund", im Round-Robin-Verfahren, also zeitscheibengesteuert, abgewickelt. Der Hintergrund-Systemebene sind z.B. Kommunikationsaufgaben zugeordnet. Bei einer folgenden getakteten Anwenderebene, bezeichnet als "Anwenderebene getaktet", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene rechtzeitig abgeschlossen ist, bevor das Startereignis erneut auftritt. Läuft die Taktzeit ab, ohne daß das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren.

Auf die "Anwenderebene getaktet" folgt eine "Anwenderebene Events". Die Reaktion auf externe oder interne Ereignisse (Events) erfolgt innerhalb der "Anwenderebene Events". Ein typisches Beispiel für ein solches Ereignis ist das Überschreiten eines Grenzwerts. In einer "Systemebene hochprior" liegen Aufgaben des Betriebssystems, welche die Arbeitsweise der speicherprogrammierbaren Steuerung sicherstellen.

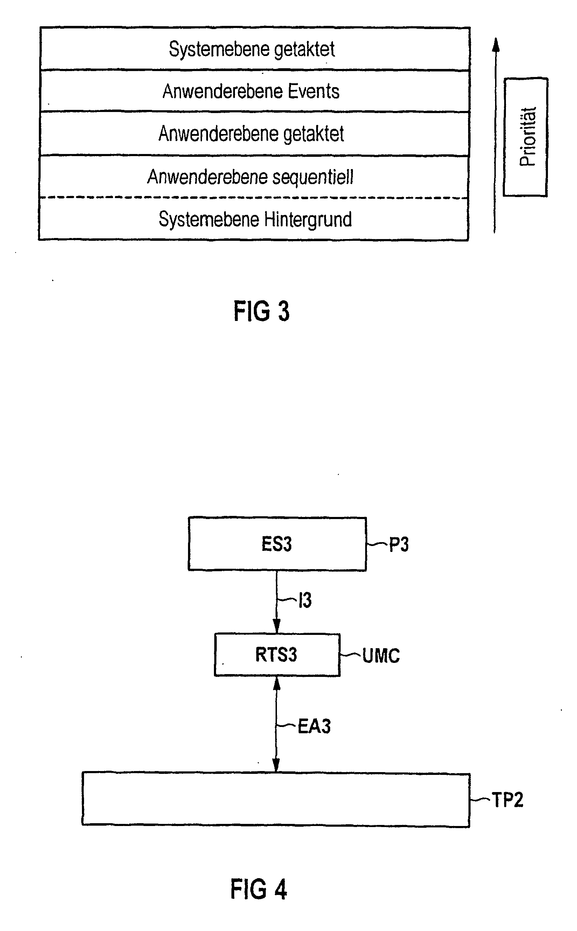

Die Darstellung gemäß FIG 3 zeigt die wesentlichen Ablaufebenen einer Bewegungssteuerung (NC; FIG 1). Auch hierbei sind die einzelnen Ebenen nach ihrer Priorität hierarchisch, wie durch einen Pfeil symbolisiert, angeordnet. Eine "Systemebene Hintergrund" und eine "Anwenderebene sequenziell" haben eine gleiche Priorität, nämlich die niedrigste. Diese aufgabenmäßige Zusammengehörigkeit ist wie bei FIG 2 durch eine gestrichelte Linie symbolisiert. Die Tasks der "Anwenderebene sequenziell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequenziell" laufen die vom Anwender programmierten Programmteile für die eigentliche Steuerungsaufgabe. Stößt die Steuerung in einem dieser Programmteile auf einen Bewegungs- oder Positionierbefehl, wird ein Suspend gesetzt, d.h. das Anwenderprogramm wird an dieser Stelle unterbrochen. Die Abarbeitung dieses Bewegungs- oder Positionierbefehls geschieht in einer höchstprioren "Systemebene getaktet". Ein jeder Lageregler, der in der "Systemebene getaktet" abläuft, führt diesen Bewegungs- bzw. Positionierbefehl aus. Nach Ausführung des Befehls wird in die "Anwenderebene sequenziell" zurückgesprungen und das durch Suspend unterbrochene Anwenderprogramm wird durch ein Resume an der gleichen Stelle fortgesetzt. Die "Systemebene getaktet" enthält neben den schon erwähnten Lagereglern auch den Interpolationsteil der Steuerung.

Auf die niederpriorste Ebene setzt eine "Anwenderebene getaktet" auf. Hier laufen zyklische Tasks ab, z.B. Reglerfunktionalitäten.

In einer folgenden "Anwenderebene Events" sind solche Tasks untergebracht, die auf externe oder interne Ereignisse reagieren. Solche Ereignisse können beispielsweise Alarme sein.

In der Darstellung gemäß FIG 4 wird ein technischer Prozeß TP2 durch eine kombinierte SPS/NC-Steuerung UMC gesteuert. Das Akronym UMC steht für UNIVERSAL-MOTION-CONTROL. Die Verbindung zwischen der Steuerung UMC und dem zugehörigen technischen Prozeß TP2 geschieht bidirektional über Ein-/Ausgänge EA3. Die Programmierung der kombinierten SPS/NC-Steuerung geschieht über ein gemeinsames Programmier- P3 oder Engineering-System ES3, wobei das Engineering-System ES3 ebenso wie bei FIG 1 eine komfortable Oberfläche für das Programmiersystem P3 zur Verfügung stellt. Die damit erstellten Programme werden über einen Informationspfad I3 in ein Run-Time-System RTS3 der universellen Bewegungssteuerung UMC übertragen.

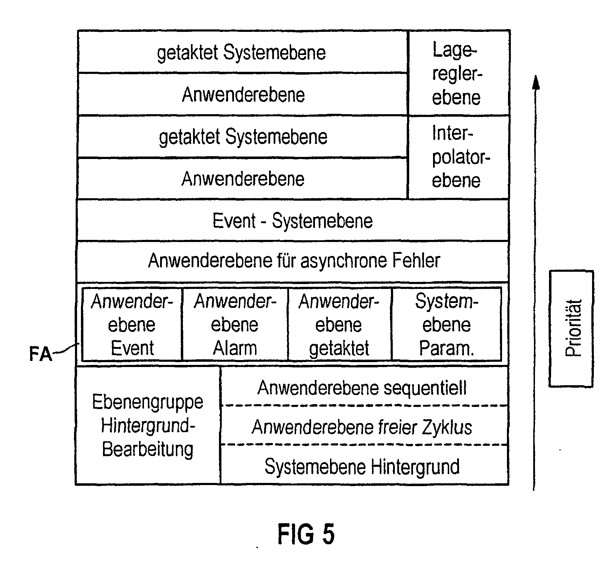

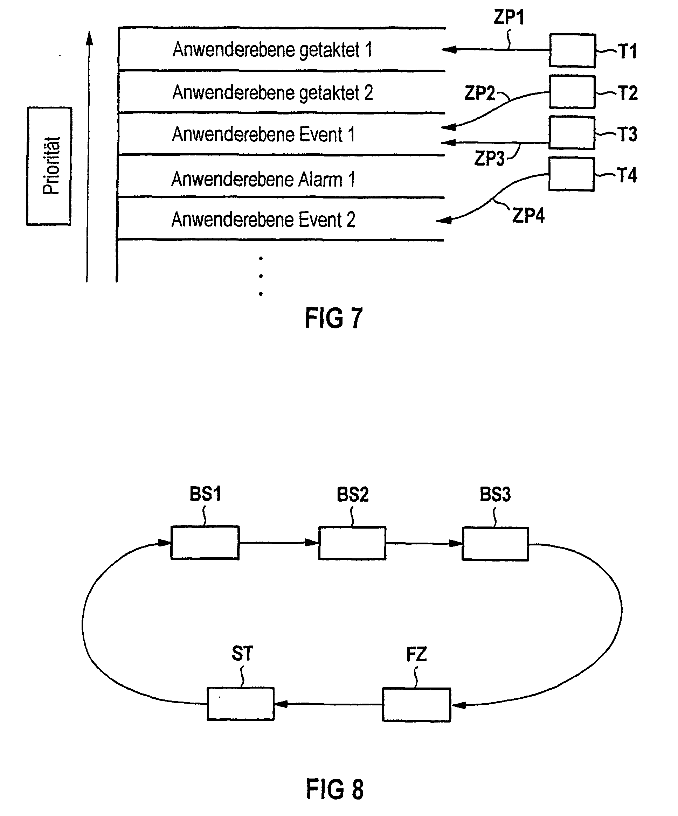

Die Darstellung gemäß FIG 5 zeigt das Ablaufebenenmodell der universellen Bewegungssteuerung. Die Priorisierung der Ebenen. wird wie im vorangegangenen durch einen Pfeil in Richtung zur höchsten Priorität angedeutet. Die niederpriorste Ebenengruppe ist die sogenannte "Ebenengruppe Hintergrund-Bearbeitung". Sie besteht aus einer "Systemebene Hintergrund", aus einer "Anwenderebene freier Zyklus" und aus einer "Anwenderebene sequenziell". Die Tasks dieser drei gleichprioren Ebenen (angedeutet durch die gestrichelten Grenzlinien) werden zyklisch im Round-Robin-Verfahren abgearbeitet. (Einzelheiten dazu werden im folgenden im Zusammenhang mit FIG 8 dargelegt). Eine auf die "Ebenengruppe Hintergrund-Bearbeitung" höherprior folgende "Ablaufebene" ist eine vom Anwender anforderungsspezifisch frei projektierbare Anwenderebene FA, durch doppelte Umrandung gekennzeichnet, für Alarm- und/oder Event- und/oder Regelungs- und/oder sonstige zyklische Tasks. Diese Anwenderebene FA besteht somit explizit aus vier Typen von Ebenen, die wiederum hinsichtlich ihrer Prioritäten innerhalb der Anwenderebene FA vom Anwender staffelbar sind, wozu im Zusammenhang mit FIG 7 noch weiteres ausgeführt wird.
Typ 1: Anwenderebene Event
Typ 2: Anwenderebene Alarm
Typ 3: Anwenderebene getaktet
Typ 4: Systemebene parametriert

Ebenen dieser Typen können vom Anwender frei wählbar innerhalb der Anwenderebene FA, mit jeweils zugrunde gelegten, vom Anwender vergebbaren Prioritäten, angeordnet werden. Damit hat der Anwender die Möglichkeit, eine den Anforderungen und Randbedingungen der Steuerungsaufgabe und des zu steuernden technischen Prozesses optimale Ausprägung der universellen Bewegungssteuerung zu erreichen.

In der "Anwenderebene Event" sind z.B. Tasks angeordnet, die auf Eingänge der Peripherie reagieren. In der "Anwenderebene Alarm" sind z.B. Tasks angeordnet, die auf Grenzwertüberwachungen reagieren. In der "Anwenderebene getaktet" sind zyklische anwenderprogrammierbare Tasks enthalten. In die "Systemebene parametriert" können von außen zuladbare Programme integriert werden. Dadurch ist es möglich, daß die universelle Bewegungssteuerung dynamisch um zusätzliche technologische Funktionalitäten erweitert werden kann. In diese "Systemebene parametriert" werden üblicherweise Tasks für langsame Regelungs- bzw. Überwachungsaufgaben (z.B. Aufgaben mit Zykluszeiten im Bereich von 100 ms) zugeladen.

Die nächsthöherpriore Ebene im Ablaufebenenmodell der universellen Bewegungssteuerung ist eine "Anwenderebene für asynchrone Fehler". In dieser Ebene kann der Anwender, ähnlich wie bei einer speicherprogrammierbaren Steuerung, die Behandlung von Fehlerzuständen ausprogrammieren. In der "Anwenderebene für asynchrone Fehler" sind z.B. Tasks angesiedelt, die auf technologische Alarme reagieren. Der Anwender hat auch die Möglichkeit, innerhalb dieser "Anwenderebene für asynchrone Fehler" eine für die Produktausprägung spezifische Anzahl von Ebenen zu parametrieren. Der Übersichtlichkeit halber sind Einzelheiten hierzu in der Darstellung nicht gezeigt. Der Anwender kann somit bedarfsweise bestimmten Fehlerereignissen eine bestimmte Priorität zuordnen.

Als nächstes folgt die "Event-Systemebene". Die Tasks der "Event-Systemebene" reagieren auf kritische interne oder externe Ereignisse, wie z.B. Nothalt.

Die nächste Ebene ist eine "Interpolatorebene". Sie enthält eine "getaktete Systemebene" und eine "Anwenderebene".

Die höchstpriore Ebene ist die "Lagereglerebene". Auch sie enthält eine "getaktete Systemebene" und eine "Anwenderebene". Die Anwenderebenen der Lageregler- und Interpolatorebene enthalten Tasks, die im Lageregler- bzw. Interpolatortakt aufgerufen werden. Die Laufzeit dieser Tasks wird überwacht, das Überschreiten einer durch das System festgelegten Zeit führt zum Abbruch der Ebene und zum Auslösen eines asynchronen Fehlers in der "Anwenderebene für asynchrone Fehler".

Der Lageregler hat eine höhere Priorität als der Interpolator, d.h. der Lageregler kann nicht vom Interpolator unterbrochen werden, wobei der Lageregler aber den Interpolator unterbrechen kann.

Im Ablaufebenenmodell der universellen Bewegungssteuerung können prinzipiell innerhalb der einzelnen Ablaufebenen neben den bereits erwähnten, weitere priorisierende Schichtungen vorgesehen sein.

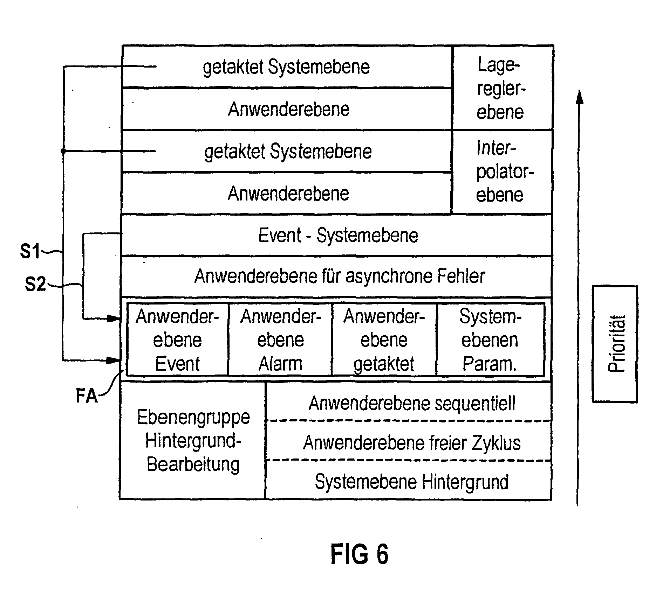

In der Darstellung gemäß FIG 6 ist gezeigt, wie durch Signale S1, die in den "Systemebenen getaktet" (Lageregler und Interpolator) bzw. durch Signale S2, die in der "Event-Systemebene" generiert werden, Tasks in der vom Anwender anforderungsspezifisch frei projektierbaren Anwenderebene FA für Alarm- und/oder Event- und/oder Regelungs- und/oder sonstige zyklische Tasks angestoßen werden.

Die Darstellung gemäß FIG 7 zeigt exemplarisch eine Ausprägung der vom Anwender anforderungsspezifisch frei projektierbaren Anwenderebene (FA; FIG 5 und 6) für Alarm- und/oder Event- und/oder Regelungs- und/oder sonstige zyklische Tasks. Den Ebenen werden Tasks T1, T2, T3 und T4 zugeordnet. Die Zuordnung wird dargestellt durch Zuordnungspfeile ZP1 bis ZP4. Die Priorisierung der Ebenen wird wie im vorangegangenen durch einen Pfeil in Richtung zur höchsten Priorität angedeutet.

Die Darstellung gemäß FIG 8 zeigt die Abarbeitung von Tasks der "Ebenengruppe Hintergrund-Bearbeitung" (FIG 5 und 6). Dabei werden Bewegungssequenzen BS1, BS2 und BS3 sowie ein freier Zyklus FZ, wie dieser prinzipiell aus speicherprogrammierbaren Steuerungen (SPS) geläufig ist, und eine System-Task ST der "Systemebene Hintergrund" im Round-Robin-Verfahren abgearbeitet. In einem derartigen Verfahren werden Tasks nach einem einheitlichen Zeitscheibenverfahren bedient. Wenn ihre Zeitscheibe abgelaufen ist oder wenn eine Unterbrechung kommt, gibt die Task die Kontrolle ab, d.h. eine nächste Task wird bedient. Durch die Wahl der Zeitscheibe besteht die Möglichkeit, die Steuerung den jeweiligen Anforderungen anzupassen. Das Verfahren Round-Robin stellt somit sicher, daß alle Tasks der Prozeßebene bedient werden. Es ist also ausgeschlossen, daß sich einzelne Tasks die Rechnerleistung ausschließlich sichern und andere Tasks nicht mehr bedient werden.

## Patentansprüche

1. Universelle Bewegungssteuerung, welche funktionell die klassischen Aufgaben einer speicherprogrammierbaren Steuerung und einer numerischen Steuerung in sich vereinigt,
**dadurch gekennzeichnet,**
**daß** ein einheitliches Ablaufebenenmodell gebildet ist, das mehrere Ablaufebenen unterschiedlichen Typs mit unterschiedlicher Priorität aufweist, wobei von höchster bis niedrigster Priorität folgende Ablaufebenen vorgesehen sind:
a) eine Lagereglerebene, bestehend aus zugehöriger getakteter Systemebene und Anwenderebene,
b) eine Interpolatorebene, bestehend aus zugehöriger getakteter Systemebene und Anwenderebene,
c) eine Event-Systemebene für reaktionspflichtige Ereignisse,
d) eine Anwenderebene für asynchrone Fehler
e) eine weitere, vom Anwender anforderungsspezifisch frei projektierbare Anwenderebene (FA) für Alarm- und/oder Event- und/oder Regelungs- und/oder sonstige zyklische Tasks (T1 - T4),
f) eine aus der Abfolge von Bewegungssequenzen (BS1 - BS3), freien Zyklen (FZ) und niederprioren sonstigen Systemtasks (ST), gebildete Ebenengruppe für Hintergrund-Bearbeitung,
wobei die Ablaufebenen a bis e eine Ebenengruppe für Echtzeit-Bearbeitung bilden.

2. Bewegungssteuerung nach Anspruch 1,
**dadurch gekennzeichnet,**
**daß** die frei programmierbaren Tasks (T1 - T4) jeweils durch Signale (S1) aus den getakteten Systemebenen und/oder durch Signale (S2) aus der Event-Systemebene auslösbar sind.

3. Bewegungssteuerung nach einem der vorstehenden Ansprüche,
**dadurch gekennzeichnet,**
**daß** weitere priorisierende Schichtungen innerhalb der Ablaufebenen vorgesehen sind.

4. Bewegungssteuerung nach Anspruch 3,
**dadurch gekennzeichnet,**
**daß** in der Anwenderebene für asynchrone Fehler die Prioritätsschichtungen anwenderprogrammierbar sind.

5. Bewegungssteuerung nach einem der vorstehenden Ansprüche,
**dadurch gekennzeichnet,**
**daß** in der Ebenengruppe für Echtzeit-Bearbeitung auch von außen zuladbare Programme integrierbar sind.

6. Bewegungssteuerung nach einem der vorstehenden Ansprüche,
**dadurch gekennzeichnet,**
**daß** in der Ebenengruppe für Hintergrund-Bearbeitung die Bewegungssequenzen (BS1 - BS3), freien Zyklen (FZ) und niederprioren sonstigen Systemtasks (ST) nach einem Round-Robin-Verfahren abwickelbar sind.

## Claims

1. A universal motion controller that functionally combines the class tasks of a programmable logic controller and a numerical controller, **characterized by** a consistent run-level model that has several run levels of various types with different priorities, and wherein the following run levels are provided, from greatest to lowest priority:
a) a position-control level, comprising associated clocked system le and user level,
b) an interpolator level, comprising associated clocked system level and user level,
c) an event system level for events requiring a response,
d) a user level for asynchronous errors,
e) an additional user-configurable user level (FA) according to user requirements, for alarm and/or event and/or control and/or other periodic tasks (T1 - T4),
f) a level group for background processing, formed from a set of motion sequences (BS1 - BS3), free cycles (FZ) and other low-priority system tasks (ST), wherein the run levels a to e form a level group for real-time processing.

2. Motion control according to Claim 1, **characterized in that** the freely programmable tasks (T1 -T4) can each be triggered by signals (S1) from the clocked system levels and/or by signals (S2) from the event system level.

3. Motion control according to one of the preceding claims, **characterized in that** additional prioritizing layers are provided within the run levels.

4. Motion control according to Claim 3, **characterized in that** the priority layers are user-programmable in the user level for asynchronous errors.

5. Motion control according to one of the preceding claims, **characterized in that** externally loadable programs can also be integrated into the level group for real-time processing

6. Motion control according to one of the preceding claims, **characterized in that** the motion sequences (BS1 - BS3), free cycles (FZ) and other low-priority systems tasks (ST) can be handled by use of a Round-Robin method in the level group for background processing.

## Revendications

1. Commande cinématique universelle, qui réunit fonctionnellement en elle les tâches classiques d'une commande par programme enregistré et d'une commande numérique,
**caractérisée par le fait qu'**il est formé un modèle uniforme de niveaux d'exécution qui comporte plusieurs niveaux d'exécution de différents types avec différentes priorités, les niveaux d'exécution suivants étant prévus de la priorité la plus haute à la priorité la plus basse :
a) un niveau régulateur de position, constitué d'un niveau de système et d'un niveau d'application cadencés associés,
b) un niveau interpolateur, constitué d'un niveau de système et d'un niveau d'application cadencés associés,
c) un niveau de système événement pour des événements nécessitant une réaction,
d) un niveau d'application pour erreurs asynchrones,
e) un autre niveau d'application (FA) pouvant être développé librement par l'utilisateur de manière spécifique aux exigences particulières pour des tâches (T1 à T4) d'alarme et/ou d'événement et/ou de régulation et/ou d'autres tâches cycliques,
f) un groupe de niveaux, formé par la succession de séquences cinématiques (BS1 à BS3), de cycles libres (FZ) et d'autres tâches de système de faible priorité (ST), pour un traitement à l'arrière plan,
les niveaux d'exécution a à e formant un groupe de niveaux pour un traitement en temps réel.

2. Commande cinématique selon la revendication 1,
**caractérisée par le fait que** les tâches (T1 à T4) librement programmables peuvent être déclenchées à chaque fois par des signaux (S1) issus des niveaux de système cadencés et/ou par des signaux (S2) issus du niveau de système événement.

3. Commande cinématique selon l'une des revendications précédentes,
**caractérisée par le fait qu'**il est prévu d'autres couches de priorité à l'intérieur des niveaux d'exécution.

4. Commande cinématique selon la revendication 3,
**caractérisée par le fait que**, dans le niveau d'application pour erreurs asynchrones, les couches de priorité sont programmables par l'utilisateur.

5. Commande cinématique selon l'une des revendications précédentes,
**caractérisée par le fait que** des programmes chargeables de l'extérieur peuvent aussi être intégrés dans le groupe de niveaux pour traitement en temps réel.

6. Commande cinématique selon l'une des revendications précédentes,
**caractérisée par le fait que** les séquences cinématiques (BS1 à BS3), cycles libres (FZ) et autres tâches de système à faible priorité (ST) peuvent être développés selon un procédé de Round-Robin dans le groupe de niveaux pour traitement à l'arrière-plan.
